# EUROPÄISCHE PATENTANMELDUNG

(11) **EP 1 621 284 A1**
(43) Veröffentlichungstag der Anmeldung: **01.02.2006**
(21) Anmeldenummer: 04016653.0
(22) Anmeldetag: 15.07.2004
(51) Int. Cl.: B23Q 7/04, B23Q 7/14

(54) **Werkstückwechsler für Bearbeitungsmaschinen**

(71) Anmelder: Maschinenfabrik Berthold Hermle Aktiengesellschaft, D-78559 Gosheim (DE)
(72) Erfinder: Bernhard, Franz-Xaver, 78549 Spaichingen (DE); Schwörer, Tobias, Dipl.-Ing. (FH), 78598 Königsheim (DE)
(74) Vertreter: Vetter, Hans

(57) **Zusammenfassung**

Es wird ein Werkstückwechsler zum Verfahren von Werkstücken oder Werkstückpaletten (10) zwischen einem vor einer Bearbeitungsmaschine (12) angeordneten Rüstplatz (13) und einem Werkstücktisch (11) vorgeschlagen, der mit einer Greifereinrichtung (20) zum Aufnehmen und Absetzen von Werkstücken oder Werkstückpaletten (10), mit einem Drehantrieb zum Verschwenken der Greifereinrichtung (20) um eine vertikale Achse und mit einer Hubeinrichtung (19) zum Anheben und Absenken der Greifereinrichtung (20) versehen ist. Ein Linearantrieb (16 - 18) dient zum Verfahren der Greifereinrichtung (20) zwischen einer ersten Position am Rüstplatz (13) und einer zweiten Position am Werkstücktisch (11). Hierdurch können bei guter Zugänglichkeit zum Werkstücktisch bei der Bearbeitung sehr schnelle Werkstückwechselvorgänge an beliebigen Bearbeitungsmaschinen vorgenommen werden.

## Beschreibung

Die Erfindung betrifft einen Werkstückwechsler zum Verfahren von Werkstücken oder Werkstückpaletten zwischen einem vor einer Bearbeitungsmaschine angeordneten Rüstplatz und einem Werkstücktisch dieser Bearbeitungsmaschine, mit einer Greifereinrichtung zum Aufnehmen und Absetzen von Werkstücken oder Werkstückpaletten, mit einem Drehantrieb zum Verschwenken der Greifereinrichtung um eine vertikale Achse, und mit einer Hubeinrichtung zum Anheben und Absenken der Greifereinrichtung.

Bei einem derartigen, aus der EP 1 321 224 B1 bekannten Werkstückwechsler ist die Greifereinrichtung schwenkbar am freien Ende eines Schwenkhebels angeordnet. Die Überlagerung der beiden erforderlichen Schwenkbewegungen erfordert eine relativ komplizierte Bewegungssteuerung, und der Rüstplatz muss relativ nahe am Werkstücktisch angeordnet sein, da er sich noch im Schwenkbereich des Schwenkarms befinden muss.

Ein aus der DE 198 53 945 A1 bekannter Werkstückwechsler besitzt einen um eine vertikale Achse schwenkbaren Doppelgreifer mit einer vertikalen Hubeinrichtung. Dieser Werkstückwechsler benötigt einen mindestens in einer linearen und horizontalen Achse verfahrbaren Werkstücktisch der Bearbeitungsmaschine und muss daher auch direkt am Maschinengestell der Bearbeitungsmaschine angeordnet sein. Da nicht alle Bearbeitungsmaschinen einen derart verfahrbaren Werkstücktisch besitzen, ist dieser bekannte Werkstückwechsler nur sehr eingeschränkt einsetzbar. Er muss direkt am Maschinengestell des Bearbeitungszentrums angeordnet sein, wodurch sich eine sehr schlechte Zugänglichkeit zum Arbeitsbereich der Bearbeitungsmaschine ergibt.

Ein aus der EP 1 201 354 A2 bekannter Werkstückwechsler besitzt ebenfalls einen um eine vertikale Achse schwenkbaren Doppelgreifer, wobei ein Rüstplatz in räumlichem Abstand zur Bearbeitungsmaschine angeordnet werden kann. Hierzu ist allerdings eine zusätzliche Lineartransportanordnung erforderlich, wobei die Übergabe von Werkstücken oder Werkstückträgern zwischen Doppelgreifer und Lineartransportanordnung technisch aufwändig und zeitaufwändig ist. Für die gesamte Anordnung ist auch ein relativ großer Platzbedarf erforderlich. Da der Doppelgreifer vom Rüstplatz nicht räumlich entkoppelt werden kann, ist auch seine Funktionsmöglichkeit eingeschränkt.

Eine Aufgabe der vorliegenden Erfindung besteht darin, einen Werkstückwechsler der eingangs genannten Gattung zu schaffen, der von der Bearbeitungsmaschine entkoppelt ist, das Umsetzen von Werkstücken oder Werkstückpaletten zwischen einem relativ weit vom Werkstücktisch entfernten Rüstplatz und diesem Werkstücktisch ermöglicht und eine gute Zugänglichkeit zur Bearbeitungsmaschine bzw. zu deren Werkstücktisch gewährleistet.

Diese Aufgabe wird erfindungsgemäß durch einen Linearantrieb zum Verfahren der Greifereinrichtung zwischen einer ersten Position am Rüstplatz und einer zweiten Position am Werkstücktisch gelöst.

Der erfindungsgemäße Werkstückwechsler ermöglicht eine sehr gute Zugänglichkeit zur Bearbeitungsmaschine, da er mittels des Linearantriebs während der Bearbeitung in eine nicht störende Parkposition weggefahren werden kann. Dadurch wird der Zugangsbereich vor der Maschine frei für eine Bedienperson. Eine lineare Bewegung des Werkstücktisches ist nicht erforderlich, so dass der Werkstückwechsler für unterschiedlichste Maschinengattungen verwendet werden kann. Die Greifereinrichtung kann sowohl vom Rüstplatz, als auch vom Bearbeitungstisch, also der Bearbeitungsmaschine entkoppelt werden. Die Greifereinrichtung führt sämtliche erforderlichen Bewegungen aus, so dass nur ein Transportsystem erforderlich ist und keine Übergabevorgänge von Werkstücken oder Paletten im Bereich zwischen Werkstücktisch und Rüstplatz erforderlich sind.

Durch die in den Unteransprüchen aufgeführten Maßnahmen sind vorteilhafte Weiterbildungen und Verbesserungen des im Anspruch 1 angegebenen Werkstückwechslers möglich.

Die Greifereinrichtung ist an einem horizontal verfahrbaren Schlitten oder Wagen angeordnet, der mit der Hubeinrichtung und dem Drehantrieb versehen ist. An diesem Schlitten sind somit sämtliche Bewegungsvorgänge integriert. Er ist zweckmäßigerweise an einer seitlichen Führungseinrichtung geführt, die dadurch zum Werkstücktisch versetzt angeordnet ist und eine noch bessere Zugänglichkeit gewährleistet.

Die Greifereinrichtung besitzt einen einfachen Greifer oder einen Doppelgreifer mit zwei nach entgegengesetzten Richtungen weisenden Greifern. Insbesondere in der Ausführung als Doppelgreifer können die Wechselvorgänge noch rationeller durchgeführt werden, da gleichzeitig beispielsweise ein bearbeitetes Werkstück auf der einen Seite und ein unbearbeitetes Werkstück auf der anderen Seite (oder Werkstückpaletten) transportiert werden kann.

Der oder die Greifer sind zum Untergreifen eines Werkstücks oder einer Werkstückpalette ausgebildet und besitzen vorzugsweise zwei Greif- und/oder Hubarme. Sie können prinzipiell jedoch auch gemäß dem eingangs angegebenen Stand der Technik (z.B. EP 1 321 224 B1) ausgebildet sein.

Der oder die Greifer können auch zwei Greif- und/oder Hubarme besitzen, die greifbackenartig gegeneinander bewegbar sind. Hierdurch können verschiedenartige Werkstücke und/oder Werkstückpaletten umgesetzt werden.

Der erfindungsgemäße Werkstückwechsler ist in vorteilhafter Weise als selbständige Einheit vor einer Bearbeitungsmaschine positionierbar, so dass ein Einsatz unabhängig von der Art der Bearbeitungsmaschine möglich ist und auch einfache Nachrüstungen realisierbar sind.

Die erfindungsgemäße Anordnung ermöglicht in einfacher Weise die Anordnung einer Speicheranordnung von Werkstücken und/oder Werkstückpaletten (zwischen Speicher, Palettenbahnhof) seitlich des linearen Verfahrwegs der Greifereinrichtung. Diese und/oder wenigstens ein Bereich der Speicheranordnung ist dabei mit einem Verfahrantrieb senkrecht zur linearen Bewegungsbahn der Greifereinrichtung zwischen Werkstücktisch und Rüstplatz versehen. Diese Speicheranordnung kann mit denselben ohnehin vorhandenen Bewegungsmechanismen für das Umsetzen von Werkstücken oder Werkstückpaletten zwischen Rüstplatz und Werkstücktisch bedient werden. Es ist lediglich ein zusätzlicher Verfahrantrieb quer zur Bewegungsrichtung des Linearantriebs erforderlich.

Die Speicheranordnung besitzt zweckmäßigerweise wenigstens einen Wechselplatz für die Übergabe und Übernahme von Werkstücken oder Werkstückpaletten durch die Greifereinrichtung, wobei eine Fördereinrichtung zum Zuführen und Abführen von Paletten- und/oder Werkstückaufnahmen zum und vom Arbeitsplatz vorgesehen ist. Diese Fördereinrichtung kann als Endlosfördereinrichtung, insbesondere als Kettenförderer oder Drehteller, oder als Linearförderer ausgebildet sein.

Die Fördereinrichtung insgesamt oder ihre Paletten- und/oder Werkstückaufnahmen können in einer vorteilhaften Variante mit dem Verfahrantrieb zum Wechselplatz versehen sein. In diesem Falle kann ein solcher Verfahrantrieb für die Greifereinrichtung entfallen. Weiterhin kann auch die Fördereinrichtung insgesamt oder ihre Paletten- und/oder Werkstückaufnahmen mit einem Hubantrieb versehen sein.

Ausführungsbeispiele der Erfindung sind in der Zeichnung dargestellt und in der nachfolgenden Beschreibung näher erläutert. Es zeigen:
- Figur 1: eine perspektivische Darstellung eines Werkstückwechslers mit einem Rüstplatz und einer Speicheranordnung für Werkstücke und/oder Werkstückpaletten in einer perspektivischen Darstellung als erstes Ausführungsbeispiel der Erfindung,
- Figur 2: ein zweites Ausführungsbeispiel in einer Ansicht von oben mit einer geänderten Verfahrantriebsanordnung und
- Figur 3: ein drittes Ausführungsbeispiel in einer Ansicht von oben mit einer anders gestalteten Speicheranordnung und einer geänderten Anordnung des Rüstplatzes.

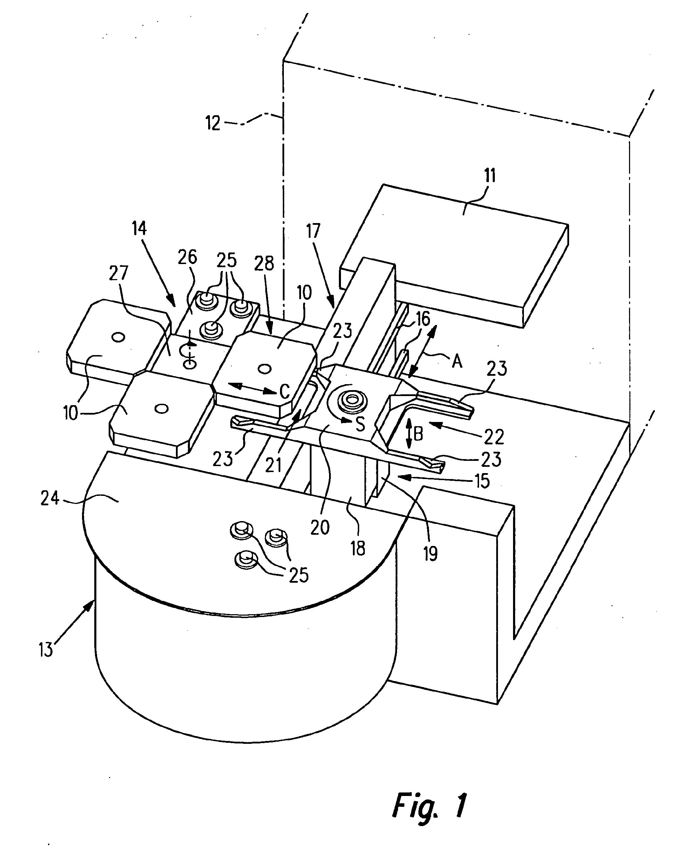

Der in Figur 1 dargestellte Werkstückwechsler dient zum Umsetzen von Werkstücken und/oder Werkstückpaletten 10 zwischen einem Werkstücktisch 11 einer im Übrigen nur schematisch dargestellten Bearbeitungsmaschine 12 und einem Rüstplatz 13 sowie zwischen einer Speicheranordnung 14 für Werkstückpaletten 10 oder Werkstücke und dem Werkstücktisch 11 und/oder dem Rüstplatz 13. Bei der Bearbeitungsmaschine 12 kann es sich beispielsweise um eine Fräsmaschine oder ein Bearbeitungszentrum handeln, das noch weitere Bearbeitungsvorgänge durchführen kann.

Eine Schlittenanordnung 15 ist an zwei horizontalen Führungsschienen 16 einer Führungseinrichtung 17 geführt, die sich im Zwischenraum zwischen dem Werkstücktisch 11 und dem Rüstplatz 13 befindet. Ein nicht dargestellter Linearantrieb (linearer Antrieb bzw. linear verfahrbarer Antrieb), beispielsweise ein Zahnriemen, ein Linearmotorantrieb, ein Spindelantrieb oder ein Fluidikantrieb, bewegt einen ersten Schlitten 18 horizontal entlang der Führungsschienen 16. An diesem ersten Schlitten 18 ist ein zweiter Schlitten 19 vertikal geführt und angetrieben und dient als Hubeinrichtung für eine an seiner Oberseite angeordnete Greifereinrichtung 20. Diese Greifereinrichtung 20 ist am zweiten Schlitten 19 mittels eines nicht näher dargestellten Drehantriebs um eine vertikale Achse verschwenkbar.

Die Greifereinrichtung 20 ist als Doppelgreifereinrichtung ausgebildet und besitzt zwei nach entgegengesetzten Richtungen weisende Greifer 21, 22, die je zwei U-förmig angeordnete Greifarme 23 besitzen. Diese dienen zum Untergreifen und Anheben bzw. Absenken von Werkstückpaletten 10 oder Werkstücken.

Der Rüstplatz 13 kann fest an der gesamten Werkstückwechslereinrichtung montiert oder als separater Rüsttisch ausgebildet sein. Auf einer Rüstplatte 24 ist eine aus drei Positionierelementen 25 bestehende Positioniereinrichtung für Werkstückpaletten 10 angeordnet, wobei die Werkstückpaletten 10 zu diesem Zweck entsprechende Ausnehmungen an der Unterseite besitzen. Selbstverständlich können auch andere bekannte Positioniereinrichtungen für Werkstückpaletten 10 oder Werkstücke vorgesehen sein, die auch auswechselbar sein können.

Die Speicheranordnung 14, die beispielsweise als Zwischenspeicher für Werkstückpaletten 10 oder Werkstücke ausgebildet sein kann und auch häufig als Palettenbahnhof bezeichnet wird, ist als Rundtakteinrichtung mit einem nicht näher dargestellten Drehantrieb ausgebildet. Eine vier Palettenaufnahmen 26 aufweisende Halteeinrichtung 27 ist um eine vertikale Achse taktweise schwenkbar, derart, dass immer eine Palettenaufnahme 26 bzw. eine sich darauf befindliche Werkstückpalette 10 an einem Wechselplatz 28 angeordnet ist, der zur Greifereinrichtung 20 hin positioniert ist. Die gesamte Speicheranordnung 14 ist seitlich der Führungseinrichtung 17 angeordnet, wobei der Wechselplatz 28 die Führungseinrichtung 17 übergreift.

In der Darstellung gemäß Figur 1 ist die Greifereinrichtung zur Übernahme einer Werkstückpalette 10 von der Speicheranordnung 14 positioniert. Durch Anheben des zweiten Schlittens 19 gelangen die beiden Greifarme 23 des einen Greifers 21 unter die Werkstückpalette 10 am Wechselplatz 28 und heben diese an. Nach einem Schwenkvorgang um 90° in der Schwenkrichtung S und eine anschließende Linearbewegung des ersten Schlittens 18 kann die Werkstückpalette 10 auf den Rüstplatz 13 abgesenkt werden und dort je nach Arbeitsvorgang bestückt, nachbestückt oder auf andere Weise für den Bearbeitungsvorgang vorbereitet werden. Das Absenken für den Rüstplatz 13 erfolgt wiederum mittels des zweiten Schlittens 19. Die Werkstückpalette 10 kann jedoch auch direkt dem Werkstücktisch 11 zugeführt werden. Hierzu macht die Greifereinrichtung 20 und der Schlittenanordnung 15 aus eine Schwenkbewegung um 90° gegen die Schwenkrichtung S und kann dann die Werkstückpalette 10 mittels einer Linearbewegung des ersten Schlittens 18 und ein anschließendes Absenken dem Werkstücktisch 11 zuführen.

Beim Umsetzen einer Werkstückpalette 11 zwischen Rüstplatz 13 und Werkstücktisch 11 macht die Greifereinrichtung 20 eine Schwenkbewegung um 180°. Dies ist beispielsweise dann der Fall, wenn eine auf dem Rüstplatz 13 vorbereitete Werkstückpalette 10 dem Werkstücktisch 11 zugeführt wird oder wenn eine auf dem Werkstücktisch 11 bearbeitete Werkstückpalette 10 anschließend wieder dem Rüstplatz 13 zugeführt wird, um das oder die darauf befindlichen Werkstücke entweder zu reinigen oder abzumontieren.

Da die Greifereinrichtung 20 als Doppelgreifer ausgebildet ist, kann beispielsweise eine zur Bearbeitung vorbereitete Werkstückpalette 10 dem Werkstücktisch 11 zugeführt werden, wobei zunächst der leere Greifer eine dort bereits bearbeitete Werkstückpalette 10 anhebt und nach einem Schwenkvorgang um 180° die unbearbeitete Werkstückpalette 10 auf den Werkstücktisch 10 absenkt. Falls die Greifereinrichtung 20 in einer einfacheren Ausführung nur einen Greifer besitzt, ist dieser mehrfache Arbeitsvorgang selbstverständlich nicht möglich, d.h., es muss zunächst eine bearbeitete Werkstückpalette 10 vom Werkstücktisch 11 abgenommen und entweder dem Rüstplatz 13 oder der Speicheranordnung 14 zugeführt werden, bevor eine noch unbearbeitete Werkstückpalette 10 von dort abgeholt und dem Werkstücktisch 11 zugeführt wird.

Die vier Palettenaufnahmen 26 der Halteeinrichtung 27 sind ebenfalls mit entsprechenden Positionierelementen 25 versehen, um Werkstückpaletten 10 zu positionieren. Da die Speicheranordnung 14 in dargestellten Ausführungsbeispiel mit drei Werkstückpaletten 10 belegt ist, ist nur eine der vier Palettenaufnahmen 26 sichtbar.

Falls die Greifarme 23 nicht bis zum Wechselplatz 28 reichen, kann die Schlittenanordnung 15 oder können die einzelnen Palettenaufnahmen 26 mit einem nicht näher dargestellten Verfahrantrieb ausgestattet sein, die ein horizontales Verfahren in der Richtung C senkrecht zur Bewegungsrichtung A des Linearantriebs des ersten Schlittens 18 ermöglichen.

Die Führungseinrichtung 17 ist seitlich versetzt zum Werkstücktisch 11 angeordnet, und der erste Schlitten 18 ist seitlich an dieser Führungseinrichtung 17 geführt. Hierdurch kann der erste Schlitten 18 und mit ihm selbstverständlich der zweite Schlitten 19 und die Greifereinrichtung 20 während der Bearbeitung vom Werkstücktisch 11 weggefahren werden, so dass eine gute Zugänglichkeit zu diesem bei der Bearbeitung gewährleistet ist. In einer alternativen Ausgestaltung können die Führungsschienen prinzipiell auch am Boden der Werkstückwechsleranordnung angeordnet sein, wobei der erste Schlitten 18 auch als Wagen oder dergleichen ausgebildet sein kann.

Im dargestellten Ausführungsbeispiel sind die Greifarme 23 der Greifer 21, 22 als starre Arme und zum Untergreifen von Werkstückpaletten 10 ausgebildet. Alternativ oder zusätzlich können die Greifarme 23 auch nach Art von Greifbacken gegeneinander bewegbar sein, um unterschiedliche Werkstückpaletten 10 oder unterschiedlich geformte Werkstücke ergreifen zu können.

Die Anordnung von Rüstplatz 13 und Speicheranordnung 14 ist auch umgekehrt möglich, d.h., die Speicheranordnung 14 ist dann am Ende der Führungseinrichtung 17 und der Rüstplatz 13 seitlich dieser Führungseinrichtung 17 angeordnet. Weiterhin kann in einer einfacheren Ausführung auch nur ein Rüstplatz 13 oder nur eine Speicheranordnung 14 vorgesehen sein. Insbesondere für den Fall, dass nur eine Speicheranordnung 14 vorgesehen ist, kann anstelle des Vertikalhubs in der Vertikalrichtung B durch den zweiten Schlitten 19 dieser auch entfallen, und die Speicheranordnung 14 oder die Halteeinrichtung 27 bzw. die einzelnen Palettenaufnahmen 26 sind mit einer Hubvorrichtung zur Bewegung in der Vertikalrichtung B ausgestattet. Auch hierdurch ist es möglich, Paletten auf die Greifereinrichtung 20 abzusenken oder von dieser anzuheben. Zum Ablegen auf den Werkstücktisch 11 muss dieser dann ebenfalls einen Vertikalantrieb besitzen.

Die gesamte Werkstückwechsleranordnung kann fest an eine Bearbeitungsmaschine 12 anmontiert oder als komplette Wechsleranordnung nur vor dieser positioniert werden.

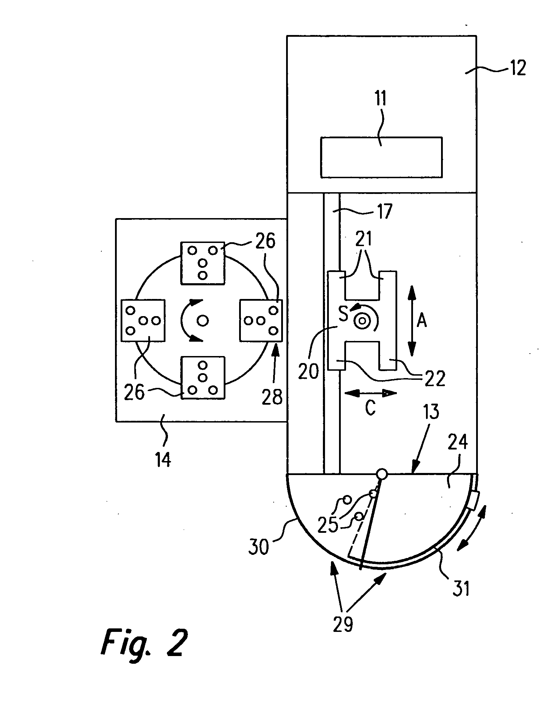

Das in Figur 2 dargestellte Ausführungsbeispiel entspricht weitgehend dem in Figur 1 dargestellten Ausführungsbeispiel, wobei gleiche oder gleichwirkende Bauteile oder Baugruppen mit denselben Bezugszeichen versehen und nicht nochmals beschrieben sind. Im Unterschied zum ersten Ausführungsbeispiel besitzt die Speicheranordnung 14 oder deren Palettenaufnahmen 26 keinen Verstellantrieb in der Verstellrichtung C. Ein solcher ist dafür in der Schlittenanordnung 15 für die Greifereinrichtung 20 integriert. Dies bedeutet, dass ein nicht dargestellter dritter Schlitten am zweiten Schlitten 19 in der Verstellrichtung C motorisch bewegbar ist. Es ist selbstverständlich auch möglich, dass zusätzlich solche Verstellantriebe in der Speicheranordnung 14 vorgesehen sind.

Beim zweiten Ausführungsbeispiel ist der Rüstplatz 13 mit einer Abschirmwandung 29 versehen, die sich vom Boden aus oder von der Ebene der Rüstplatte 24 aus vertikal nach oben erstreckt. Sie besteht aus einem festen Wandbereich 30 und einem schwenkbaren Wandbereich 31, der sich in den festen Wandbereich 30 hinein und darüber hinaus verschwenken lässt, um Werkstücke oder Werkstückpaletten 11 vorbereiten oder nachbereichten zu können.

Es sei noch erwähnt, dass die Speicheranordnung 14 selbstverständlich nicht nur vier Palettenaufnahmen 26 aufweisen muss, sondern die Zahl kann auch kleiner und insbesondere auch großer sein.

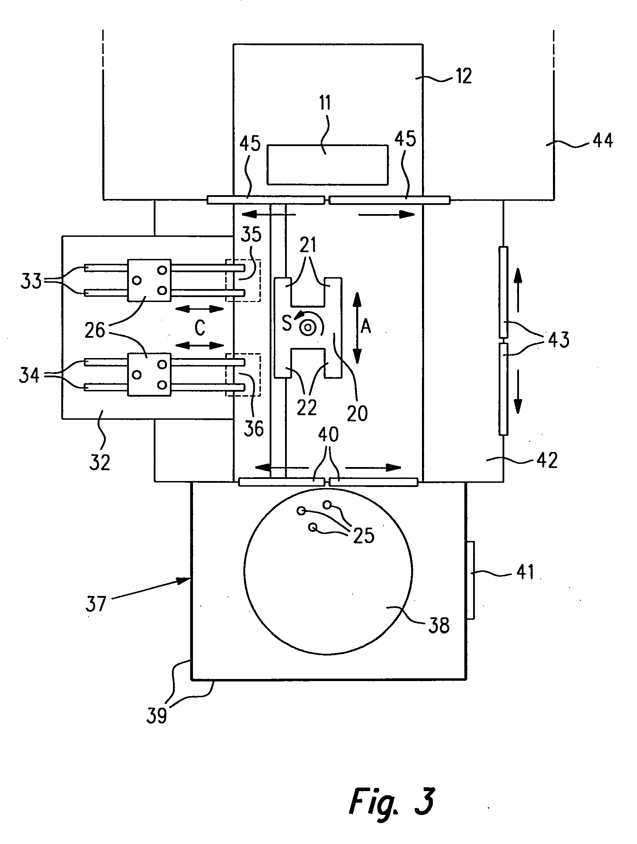

Bei dem in Figur 3 dargestellten dritten Ausführungsbeispiel sind wiederum gleiche oder gleichwirkende Bauteile oder Baugruppen mit denselben Bezugszeichen versehen und nicht nochmals beschrieben. Anstelle der Speicheranordnung 14 mit einem Drehtisch oder Drehteller tritt jetzt eine Speicheranordnung 32 mit zwei Linearführungen 33, 34, entlang denen Palettenaufnahmen 26 mittels nicht dargestellter Linearantriebe zu Wechselplätzen 35, 36 hin und zurück bewegbar sind, um von dort durch die Greifereinrichtung 20 übernommen zu werden oder von dieser aus abgelegt zu werden. Im einfachsten Falle kann auch nur eine Linearführung 33 bzw. 34 oder können eine größere Zahl von Linearführungen vorgesehen sein. Nach der Abnahme einer Werkstückpalette 10 oder eines Werkstücks wird die jeweilige Palettenaufnahme 26 jeweils vom zugeordneten Wechselplatz 35 bzw. 36 wegbewegt, um an einer nicht näher dargestellten Übergabestelle beispielsweise zu einem Hauptspeicher abgenommen oder beladen zu werden.

Bei diesem Ausführungsbeispiel ist ein Rüstplatz 37 mit einer runden Rüstplatte 38 vorgesehen, die wiederum am Ende der Führungseinrichtung 17 fest oder lose angeordnet sein kann. Der Rüstplatz 37 ist dabei als Rüstkammer mit Seitenwandungen 39 ausgebildet, wobei Schiebetüren 40 den Rüstplatz 37 zur Führungseinrichtung 17 hin öffnen und schließen können. Eine Tür 41 für eine den Rüstvorgang vornehmende Person ist ebenfalls vorgesehen.

Auch die Führungseinrichtung 17 ist in einer Führungskammer 42 angeordnet, die Schiebetüren 43 als Zugang besitzt. Diese Führungskammer 42 grenzt an eine kammerartige Umwandung 44 der Bearbeitungsmaschine 12 an, wobei wiederum Schiebetüren 45 den Zugang zum Werkstücktisch 11 öffnen oder verschließen.

Auch die Ausführungsbeispiele gemäß den Figuren 2 und 3 können in einfacheren Ausführungen nur einen Rüstplatz oder nur eine Speicheranordnung besitzen, die seitlich und/oder am Ende der Führungseinrichtung 17 positioniert sein können.

## Patentansprüche

1. Werkstückwechsler zum Verfahren von Werkstücken oder Werkstückpaletten (10) zwischen einem vor einer Bearbeitungsmaschine (12) angeordneten Rüstplatz (13; 37) und einem Werkstücktisch (11) dieser Bearbeitungsmaschine (12), mit einer Greifereinrichtung (20) zum Aufnehmen und Absetzen von Werkstücken oder Werkstückpaletten (10), mit einem Drehantrieb zum Verschwenken der Greifereinrichtung (20) um eine vertikale Achse, und mit einer Hubeinrichtung (19) zum Anheben und Absenken der Greifereinrichtung (20), **gekennzeichnet durch** einen Linearantrieb (16 - 18) zum Verfahren der Greifereinrichtung (20) zwischen einer ersten Position am Rüstplatz (13; 37) und einer zweiten Position am Werkstücktisch (11).

2. Werkstückwechsler nach Anspruch 1, **dadurch gekennzeichnet, dass** die Greifereinrichtung (20) an einem horizontal verfahrbaren Schlitten (18) oder Wagen angeordnet ist, der mit der Hubeinrichtung (19) und dem Drehantrieb versehen ist.

3. Werkstückwechsler nach Anspruch 2, **dadurch gekennzeichnet, dass** der Schlitten (18) oder Wagen an einer seitlichen Führungseinrichtung (16, 17) geführt ist.

4. Werkstückwechsler nach einem der vorhergehenden Ansprüche, **dadurch gekennzeichnet, dass** die Greifereinrichtung (20) einen einfacher Greifer oder einen Doppelgreifer mit zwei nach entgegengesetzten Richtungen weisenden Greifern (21, 22) aufweist.

5. Werkstückwechsler nach Anspruch 4, **dadurch gekennzeichnet, dass** der oder die Greifer (21, 22) zum Untergreifen eines Werkstücks oder einer Werkstückpalette (10) ausgebildet sind und vorzugsweise zwei Greif- und/oder Hubarme (23) besitzen.

6. Werkstückwechsler nach Anspruch 4 oder 5, **dadurch gekennzeichnet, dass** der oder die Greifer (21, 22) zwei Greif- und/oder Hubarme besitzen, die greifbackenartig gegeneinander bewegbar sind.

7. Werkstückwechsler nach einem der vorhergehenden Ansprüche, **dadurch gekennzeichnet, dass** er als selbständige Einheit vor einer Bearbeitungsmaschine (12) positionierbar ist.

8. Werkstückwechsler nach einem der vorhergehenden Ansprüche, **dadurch gekennzeichnet, dass** seitlich des linearen Verfahrwegs der Greifereinrichtung (20) eine Speicheranordnung (14; 32) für Werkstücke und/oder Werkstückpaletten (10) angeordnet ist, und dass die Greifereinrichtung (20) und/oder wenigstens ein Bereich der Speicheranordnung (14; 32) mit einem Verfahrantrieb senkrecht zur linearen Bewegungsbahn (A) der Greifeinrichtung (20) zwischen Werkstücktisch (11) und Rüstplatz (13; 37) versehen ist.

9. Werkstückwechsler nach Anspruch 7, **dadurch gekennzeichnet, dass** die Speicheranordnung (14; 32) wenigstens einen Wechselplatz (28; 35, 36) für die Übergabe und Übernahme von Werkstücken oder Werkstückpaletten (10) durch die Greifereinrichtung (20) besitzt, und dass eine Fördereinrichtung zum Zuführen und Abführen von Paletten- und/oder Werkstückaufnahmen (26) zum und vom Wechselplatz (28; 35, 36) vorgesehen ist.

10. Werkstückwechsler nach Anspruch 9, **dadurch gekennzeichnet, dass** die Fördereinrichtung als Endlosfördereinrichtung, insbesondere als Kettenförderer oder Drehteller (27) oder als Linearförderer (33, 34) ausgebildet ist.

11. Werkstückwechsler nach Anspruch 9 oder 10, **dadurch gekennzeichnet, dass** die Fördereinrichtung insgesamt oder ihre Paletten- und/oder Werkstückaufnahmen (26) mit einem Verfahrantrieb zum Wechselplatz (28; 35, 36) und/oder einem Hubantrieb versehen sind.

## Geänderte Patentansprüche

### Geänderte Patentansprüche gemäss Regel 86(2) EPÜ.

**1.** Mit einem Rüstplatz versehener Werkstückwechsler zum Verfahren von Werkstücken oder Werkstückpaletten (10) zwischen dem Rüstplatz (13; 37) und einem Werkstücktisch (11) einer Bearbeitungsmaschine (12), mit einer Greifereinrichtung (20) zum Aufnehmen und Absetzen von Werkstücken oder Werkstückpaletten (10), mit einem Drehantrieb zum Verschwenken der Greifereinrichtung (20) um eine vertikale Achse, mit einer Hubeinrichtung (19) zum Anheben und Absenken der Greifereinrichtung (20), und mit einem Linearantrieb (16 - 18) zum Verfahren der Greifereinrichtung (20) zwischen einer ersten Position am Rüstplatz (13; 37) und einer zweiten Position am Werkstücktisch (11), wobei der Werkstückwechsler als selbständige Einheit vor einer Bearbeitungsmaschine (12) positionierbar ist.

**2.** Werkstückwechsler nach Anspruch 1, **dadurch gekennzeichnet, dass** die Greifereinrichtung (20) an einem horizontal verfahrbaren Schlitten (18) oder Wagen angeordnet ist, der mit der Hubeinrichtung (19) und dem Drehantrieb versehen ist.

**3.** Werkstückwechsler nach Anspruch 2, **dadurch gekennzeichnet, dass** der Schlitten (18) oder Wagen an einer seitlichen Führungseinrichtung (16, 17) geführt ist.

**4.** Werkstückwechsler nach einem der vorhergehenden Ansprüche, **dadurch gekennzeichnet, dass** die Greifereinrichtung (20) einen einfacher Greifer oder einen Doppelgreifer mit zwei nach entgegengesetzten Richtungen weisenden Greifern (21, 22) aufweist.

**5.** Werkstückwechsler nach Anspruch 4, **dadurch gekennzeichnet, dass** der oder die Greifer (21, 22) zum Untergreifen eines Werkstücks oder einer Werkstückpalette (10) ausgebildet sind und vorzugsweise zwei Greif- und/oder Hubarme (23) besitzen.

**6.** Werkstückwechsler nach Anspruch 4 oder 5, **dadurch gekennzeichnet, dass** der oder die Greifer (21, 22) zwei Greif- und/oder Hubarme besitzen, die greifbackenartig gegeneinander bewegbar sind.

**7.** Werkstückwechsler nach einem der vorhergehenden Ansprüche, **dadurch gekennzeichnet, dass** seitlich des linearen Verfahrwegs der Greifereinrichtung (20) eine Speicheranordnung (14; 32) für Werkstücke und/oder Werkstückpaletten (10) angeordnet ist, und dass die Greifereinrichtung (20) und/oder wenigstens ein Bereich der Speicheranordnung (14; 32) mit einem Verfahrantrieb senkrecht zur linearen Bewegungsbahn (A) der Greifeinrichtung (20) zwischen Werkstücktisch (11) und Rüstplatz (13; 37) versehen ist.

**8.** Werkstückwechsler nach Anspruch 7, **dadurch gekennzeichnet, dass** die Speicheranordnung (14; 32) wenigstens einen Wechselplatz (28; 35, 36) für die Übergabe und Übernahme von Werkstücken oder Werkstückpaletten (10) durch die Greifereinrichtung (20) besitzt, und dass eine Fördereinrichtung zum Zuführen und Abführen von Paletten- und/oder Werkstückaufnahmen (26) zum und vom Wechselplatz (28; 35, 36) vorgesehen ist.

**9.** Werkstückwechsler nach Anspruch 8, **dadurch gekennzeichnet, dass** die Fördereinrichtung als Endlosfördereinrichtung, insbesondere als Kettenförderer oder Drehteller (27) oder als Linearförderer (33, 34) ausgebildet ist.

**10.** Werkstückwechsler nach Anspruch 8 oder 9, **dadurch gekennzeichnet, dass** die Fördereinrichtung insgesamt oder ihre Paletten- und/oder Werkstückaufnahmen (26) mit einem Verfahrantrieb zum Wechselplatz (28; 35, 36) und/oder einem Hubantrieb versehen sind.
